(19) Europäisches Patentamt
European Patent Office
Office européen des brevets

(11) **EP 2 079 119 B1**

(12) **EUROPEAN PATENT SPECIFICATION**

(45) Date of publication and mention
of the grant of the patent:
**02.01.2013 Bulletin 2013/01**

(51) Int Cl.:
**H01M 2/16** (2006.01)

(21) Application number: **07829661.3**

(22) Date of filing: **12.10.2007**

(86) International application number:
**PCT/JP2007/069925**

(87) International publication number:
**WO 2008/044761 (17.04.2008 Gazette 2008/16)**

(54) **PROCESS FOR MANUFACTURING A SEPARATOR FOR A NONAQUEOUS ELECTROLYTE SECONDARY BATTERY**

VERFAHREN ZUR HERSTELLUNG EINES TRENNGLIEDS FÜR EINE SEKUNDÄRBATTERIE MIT WASSERFREIEM ELEKTROLYT

PROCÉDÉ DE FABRICATION D'UN SÉPARATEUR POUR ACCUMULATEUR SECONDAIRE À ÉLECTROLYTE NON AQUEUX

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.10.2006 JP 2006280212**

(43) Date of publication of application:
**15.07.2009 Bulletin 2009/29**

(73) Proprietors:
• **Toyo Tanso Co., Ltd.**
**Osaka-shi**
**Osaka 555-0011 (JP)**
• **Asahi Kasei Chemicals Corporation**
**Tokyo 100-8440 (JP)**

(72) Inventors:
• **TOJO, Tetsuro**
**Osaka-shi**
**Osaka 555-0011 (JP)**
• **TAKEBAYASHI, Hitoshi**
**Osaka-shi**
**Osaka 555-0011 (JP)**
• **HONGU, Makoto**
**Osaka-shi**
**Osaka 555-0011 (JP)**
• **SAITO, Shinji**
**Tsu-shi**
**Mie 514-1118 (JP)**
• **HATAYAMA, Hiroshi**
**Moriyama-shi**
**Shiga 524-0002 (JP)**

(74) Representative: **TBK**
**Bavariaring 4-6**
**80336 München (DE)**

(56) References cited:
EP-A1- 0 696 822          EP-A1- 0 743 690
JP-A- 61 019 056          JP-A- 2000 173 665
JP-A- 2002 226 639        JP-A- 2002 343 326
JP-A- 2005 317 217        US-B1- 6 710 098

• **DU TOIT F J ET AL: "Surface fluorination of polypropylene - 1. Characterisation of surface properties", JOURNAL OF FLUORINE CHEMISTRY, ELSEVIER, NL, vol. 98, no. 2, 1 September 1999 (1999-09-01), pages 107-114, XP004199244, ISSN: 0022-1139, DOI: 10.1016/S0022-1139(99)00091-3**

EP 2 079 119 B1

## Description

### TECHNICAL FIELD

The present invention relates to fluorinated separators for a nonaqueous electrolyte secondary battery, and separators for a nonaqueous electrolyte secondary battery using the same.

### BACKGROUND ART

Separators of nonaqueous electrolyte secondary batteries such as lithium ion secondary batteries have to be electrically insulative to separate the negative and positive electrodes from each other, and be chemically or electrochemically stable against nonaqueous electrolyte. For such separators in general is used a microporous film made of resin such as polyolefin, nonwoven fabric, or the like. For the past several years, there has been a need for a separator whose thickness is reduced while maintaining a high capacity of a battery, and which separator having a sufficient mechanical strength to prevent internal short-circuits. Further, a current-shutting-down characteristic (hereinafter, shutdown characteristic) is also essential for ensuring safety. This is because, when overcharging, mishandling, or the like leads to an excessive rise in the temperature of the battery, fine pores of a separator are clogged and the movement of ions is blocked due to the characteristic, and the temperature of the battery is consequently restrained from further rising. To this end, a low-melting polyolefin based resin such as polyethylene or polypropylene is often used as a material for separators. The insulation property and mechanical strength of the separator have been maintained by molecular mass, porosity, or pore distribution of the resin.

A typical polyolefin-based material however is hydrophobic and not sufficiently capable of retaining an electrolyte. If an electrolyte is not sufficiently retained, leakage of electrolyte may take place due to, for example, contraction/expansion of the negative electrode at the time of charging/discharging. This may dry up the electrolyte, consequently leading to capacity drop or battery deterioration. On this account, various approaches have been suggested for hydrophilizing a polyolefin based material and improving affinity for the electrolyte. These approaches include: sulfonation, corona discharge, plasma discharge, exposure to an ultra-violet ray, or the like. However, there still remains a problem of decrease in the material strength and a problem in the processing cost or the sustainability of the effects, and none of the approaches provides a sufficient solution.

Another approach for hydrophilizing a polyolefin based material is to expose the material to a gas containing fluorine gas. This method and a separator produced by the method are disclosed in for example, Patent Document 1 and Patent documents 2. The method provides through a simple process a separator whose material strength is not reduced.

[Patent Document 1] Japanese Unexamined Patent Publication No. 116436/1994 (Tokukaihei 6-116436)
[Patent Document 2] Japanese Patent No. 3521523

### DISCLOSURE OF THE INVENTION

### [TECHNICAL PROBLEM]

However, with the separators disclosed in the above Patent documents 1 and 2, there is a problem that the shutdown characteristic of the polyolefin-based material is lost when the battery heats up to high temperatures. This is mainly because a cross-linking reaction of macromolecular chain take place during a process reaction, and this reaction reduces the fluidity of the molten polyolefin-based material.

It is therefore an object of the present invention to provide a separator and a multilayered separator, for nonaqueous electrolyte secondary battery such as lithium ion secondary battery, whose affinity for electrolyte is improved to retain electrolyte better and whose shutdown characteristic is maintained.

### [TECHNICAL SOLUTION]

A separator of the present invention for a nonaqueous electrolyte secondary battery is obtained by processing, a polyolefin based resin with fluorine gas according to the method of claim 10. A contact angle of the separator with a nonaqueous solvent electrolyte is 40° or smaller. A shutdown temperature of the separator is 170°C or lower. A multilayered separator of the present invention for a nonaqueous electrolyte secondary battery includes a plurality of layers, at least one of which is the foregoing separator for a nonaqueous electrolyte secondary battery. In a separator of the present invention for a nonaqueous electrolyte secondary battery, a functional group having affinity for electrolyte is introduced to at least a part of a surface of a polyolefin based resin. A contact angle of the separator with a nonaqueous solvent electrolyte is 40° or smaller. A shutdown temperature of the separator is 170°C or lower.

[ADVANTAGEOUS EFFECTS]

The separator and the multilayered separators of the present invention for a nonaqueous electrolyte secondary battery has a remarkably improved electrolyte-retaining characteristic, while maintaining the shutdown characteristic thereof.

BEST MODE FOR CARRYING OUT THE INVENTION

The following describes an embodiment of a separator for nonaqueous electrolyte secondary battery (hereinafter, referred to as nonaqueous electrolyte secondary battery separator), according to the present invention. In the present embodiment, a functional group, such as carbonyl group or carboxyl group, which exhibits affinity for electrolyte is introduced through a fluorination to at least a part of the surface of an unprocessed separator, so as to achieve an electrolyte-retaining characteristic. To maintain the shutdown characteristic at this time, the fluorination is performed under specific conditions. Note that fluorination of the present invention is a minor process conducted to a part of or the entire surface of the separator, with the lowest possible partial pressure of fluorine gas. Specifically, the process exposes partially or entirely the surface of the separator to a mixed gas containing oxygen gas and fluorine gas, at a temperature between -50°C and 100°C. The fluorine gas is generated by a not-shown fluorine gas generator. The partial pressure of the fluorine gas generated is between 1 to 100 Pa.

With the fluorine gas partial pressure within the above range, the shutdown characteristic and the electrolyte retaining characteristic are suitably maintained. Introduction of the functional group having affinity for electrolyte is not possible when a fluorine gas partial pressure is lower than 1Pa. Although the fluorine gas partial pressure higher than 100 Pa allows introduction of the functional group having affinity for electrolyte, such a partial pressure also progresses the cross-linking reaction of macromolecular chain. Therefore, the fluidity of molecules is deteriorated, consequently raising the shutdown temperature. Further, the reaction heat also increases during the process, and may melt the separator surface. The molten separator surface of the separator may plug the fine pores of the separator. Thus, there is a possibility of losing the shutdown characteristic itself. The fluorine partial pressure is more preferably between 1 and 50Pa. The partial pressure of the oxygen gas to be mixed in is not particularly limited; however, the partial pressure of the oxygen gas is preferably between 1kPa and 300 kPa, more preferably, between 50kPa and 200kPa. Note that the oxygen gas to be mixed in may be suitably diluted by an inert gas such as nitrogen gas or helium gas.

By subjecting the separator made of a polyolefin based resin to the fluorination of the present invention, a functional group, such as a carbonyl group or a carboxyl group, having affinity for electrolyte is introduced to at least a part of the surface of the separator. The introduced functional group with affinity for electrolyte can be confirmed by a known analysis method such as X-ray photoemission spectroscopy (XPS) or Time of Flight Secondary Ion Mass Spectrometry (TOF-SIMS).

A contact angle formed between a nonaqueous solvent electrolyte and the separator of the present invention needs to be 40° or less. A contact angle of more than 40° results in a poor electrolyte retaining characteristic, and sufficient battery performance is not achieved. The contact angle is preferably 30° or less, and is more preferably 20°. Further, a shutdown temperature needs to be 170°C or lower. Preferably, the shutdown temperature is 160°C or lower, and is more preferably 155°C. A shutdown temperature of more than 170°C delays the shut down, and does not therefore provide sufficient prevention of short-circuits in the battery.

Further, a suitable amount of cross-linking reaction occurs when the separator undergoes the fluorination, and a favorable shutdown characteristic is easily achieved. In view of this, the specific surface area measured by a nitrogen adsorption method using a surface area measuring instrument is preferably $1m^2/g$ or more, but not more than $100m^2/g$ in consideration that the wall surface of air hole parts are evenly processed in the fluorination. The specific surface area is more preferably between $10m^2/g$ and $80m^2/g$, and even more preferably between $15m^2/g$ and $60m^2/g$.

The thickness of the separator of the present invention is preferably $\mu$m or more, but not more than $100\mu$m. A separator having a thickness of $1\mu$m or more is sufficiently insulative. Further, a separator having a thickness of $100\mu$m or less occupies a less volume, and is therefore advantageous in realizing a battery having a higher capacity. More preferably, the thickness of the separator is between $2\mu$m and $50\mu$m, and even more preferably between $5\mu$m and $40\mu$m.

The porosity of the separator of the present invention is preferably 25% or more in terms of permeability, and is preferably 90% or less so that the possibility of self-discharge is reduced and the reliability is ensured. The porosity is more preferably between 30% and 70%, and more preferably between 35% and 60%.

Further, the air permeability of the separator of the present embodiment is preferably 10 sec or more (measured by a Gurley air permeability tester in compliance with Japanese Industrial Standard (JIS) P-8117), as an amount of self-discharge is less in a battery adopting a separator having such an air permeability. Further, to achieve a favorable charge/discharge characteristic, the air permeability is preferably 1000 sec or less. More preferably, the air permeability of the separator is between 50 to 700 sec, and even more 80 to 500 sec.

The mode diameter (porosi mode diameter/) of the separators pore of the present embodiment is preferably $0.05\mu m$ or larger, when measured by a mercury penetration method using a mercury porosimeter. Such a pore diameter allows the walls of hole portions to be evenly fluorinated, and results in excellent ion permeability. Further, in order to achieve the reliability by reducing the possibility of self-discharge and obtaining a favorable shutdown characteristic, the pore diameter (porosi mode diameter) is preferably not more than $5\mu m$. The pore diameter is more preferably between $0.07\mu m$ and $1\mu m$, and even more preferably between $0.1\mu m$ and $0.7\mu m$.

Further, in the present embodiment, the puncture strength of the separator is preferably 2N or more. This is because the puncture strength of 2N or more prevents membrane rapture caused by an active material or the like having fallen away at the time of a battery foiling process. Further, such a puncture strength reduces the possibility of short-circuits caused by expansion/contraction at the time of charging/discharging. The maximum puncture strength is not limited. However, the puncture strength is preferably not more than 20N, in terms of reducing the width contraction by orientation relaxation at the time of heating. More preferably, the puncture strength is between 3N and 10N, and even more preferably between 4N and 8N. The puncture strength in this specification is the maximum puncture load (N) resulting from a puncture test conducted using a handy compression tester (KES-G5; produced by Kato Tech CO., LTD.) with a needlepoint curvature radius of 0.5 mm and at a puncture speed of 2 mm/sec.

In terms of restraining short-circuits between electrodes, the thermal shrinkage of the separator of the present embodiment is 30% or lower, more preferably 20% or lower, and even more preferably 10% or lower.

As such a separator mentioned above is used a microporous film made of a polyolefin resin such as polyethylene and polypropylene. The production method of such a microporous film is not particularly limited. For example, methods described in the following documents are adopted as the production method: Japanese Unexamined Patent Publications No. 220453/1997(Tokukaihei 9-220453) and No. No. 322989/1999 (Tokukaihei 11-322989); and Japanese Patents No. 3258737 and No. 3235669. More specifically, there is a so-called wet method, and a so-called dry method. In the wet method, polyolefin powder is mixed with a plasticizer. The mixture is molten and extruded, and then the plasticizer is extracted with solvents to form fine pores. In the dry method, polyolefin, without mixing a plasticizer, is molten and is extruded to form a film through a T-die method or tubular method. The film is then subjected to a heat treatment at a temperature nearby the crystallization temperature of polyolefin, and is stretched in one axis or two axes to form fine pores. Further, the following method or the like for forming a microporous film is also adoptable. Namely, polyolefin is mixed with inorganic particles, and the mixture is molten and extruded to form a film. The film is then stretched in one axis or two axes, and the boundary surfaces of the inorganic particles are separated from that of the polyolefin resin to form fine pores. Note that it is possible to adopt a joint extrusion method to form a multilayered separator, when extruding the mixture. Alternatively, a multilayered separator may be formed by laminating plural pieces of single-layered microporous film produced by a given method, and thermally bonding the pieces of single-layered microporous film between heated press rolls or the like.

The polyethylene used is preferably a single-stage or multi-stage polymer of high-pressure method low-density polyethylene, linear low-density polyethylene, or high-density polyethylene. The density of the high-density polyethylene is preferably between $0.941g/cm^3$ and $0.959g/cm^3$, so that a high strength is easily achieved and that affinity for electrolyte is easily improved through fluorination. A catalyst for producing the linear low-density polyethylene and high-density polyethylene is not particularly limited. For example, a typical titanium based catalyst, chrome based catalyst, or metallocene based catalyst may be used. Further, the configuration of polypropylene is not particularly limited. Polypropylene may be isotactic polymer, sydiotactic polymer, atactic polymer, or the like. Further, polypropylene may be a random copolymer or block copolymer. These resins may be mixed with one another or mixed with another resin provided that the effects of the separator of the present embodiment is not lost. An inorganic filler, a heat stabilizer, or the like may be added. Further, to achieve a favorable shutdown characteristic and favorable affinity for electrolyte, polyolefin having a side chain of alkyl group may be mixed. Examples of such polyolefin are: polyethylene copolymer including comonomer such as 1-butene, 4-methyl-1-pentenel-hexene, and 1-octene, polypropylene, or polyethylene produced by using a chrome series based catalyst.

The temperature at which the separator is exposed to fluorine gas is preferably between -50 °C to 100°C. At temperatures lower than -50°C, a functional group with affinity for electrolyte is not sufficiently introduced. This is not preferable in terms of affinity for electrolyte. Further, temperatures higher than 100°C causes deformation or combustion of the separator due to an excessive heat generated in the reaction with fluorine gas. More preferably, the temperature is 50°C or lower.

Further, the volume ratio of fluorine gas versus oxygen gas (fluorine gas/oxygen gas) is preferably less than 0.01, and is more preferably less than 0.001. The volume ratio of less than 0.01 ensures favorable shutdown characteristic. On the other hand, when the volume ratio is 0.01 or more, cross-linking reaction of the macromolecular chain may progress, or fine pores of the separator may be clogged due to generation of an excessive reaction heat, consequently harming the shutdown characteristic.

In the nonaqueous electrolyte secondary battery separator of the present embodiment, the electrolyte-retaining characteristic is remarkably improved, while the shutdown performance is maintained. The same effect is achieved in a multilayered separator for a nonaqueous electrolyte secondary battery (hereinafter, nonaqueous electrolyte secondary battery multilayered separator) including at least one layer which is the nonaqueous electrolyte secondary battery separator of the present embodiment.

[Example]

The following describes the nonaqueous electrolyte secondary battery separator or nonaqueous electrolyte secondary battery multilayered separator of the present invention with reference to various examples. First, examples and comparative examples are described. Then, a measurement method, evaluation method, and results of measurement and evaluation are described.

(Production of Test Pieces for Examples 1 to 7 and Comparative Examples 1 to 5)

[Example 1 to 7]

To prepare test pieces for Examples 1 to 7 of the present invention, a polyethylene microporous film (Product Name: Highpore, produced by Asahi Kasei Chemicals Corporation) of $20\mu m$ in thickness is placed in a stainless reaction vessel. The vessel is vacuum-pumped, and fluorination is conducted under conditions indicated in Table 1 below.

[Comparative Examples 1 to 5]

In Comparative Example 1, a non-fluorinated polyethylene porous film is used. For Comparative Examples 2 to 5, test pieces are prepared by conducting fluorination under conditions indicated in Table 1.

(Contact Angle Measuring Method)

A contact angle between the surface of each test piece and a nonaqueous solvent electrolyte was measured using a contact angle meter (Model: G-1, produced by Erma Inc, and propylene carbonate (PC) as the nonaqueous solvent electrolyte. To measure the contact angle, each test piece was placed in a 20°C-atmosphere, and a droplet of the nonaqueous solvent electrolyte was dropped on the surface of the test piece. Then, the angle formed between the surface of and the droplet was measured by a protractor in the field of vision.

(Shutdown Temperature Evaluation Test)

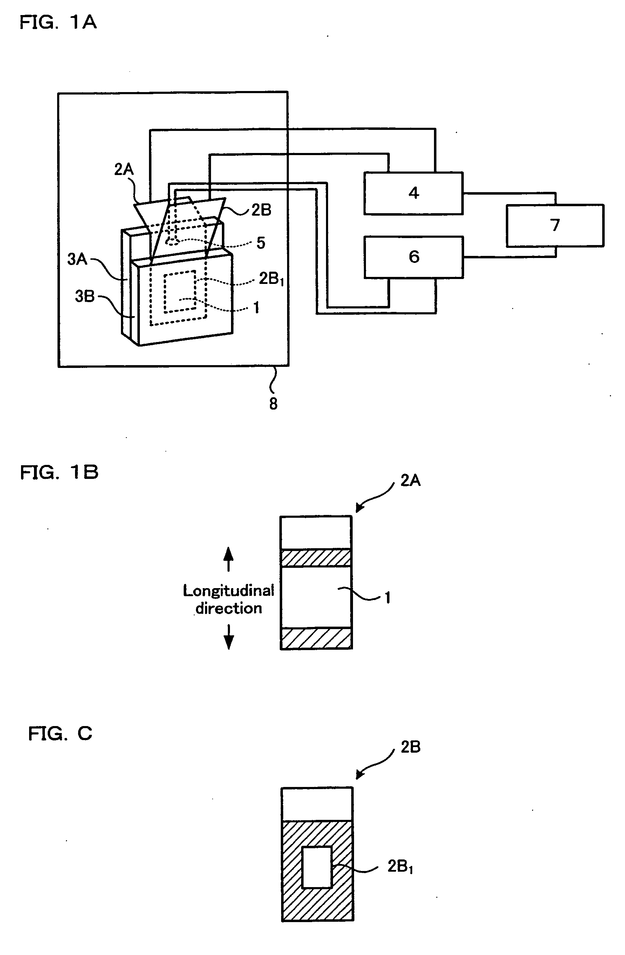

Fig. 1(a) illustrates an overview of a shutdown temperature evaluation test device. The reference numeral 1 indicates a microporous film (any one of the test pieces for Examples and Comparative Examples of the nonaqueous electrolyte secondary battery separator of the present invention). The reference numerals 2A and 2B each indicates a nickel foil of $10\mu m$ in thickness. The reference numerals 3A and 3B each indicates a glass plate of 25 mm in width, 76 mm in length, and 1.4 mm in thickness. The reference numeral 4 indicates an electric resistance meter (LCR meter (Model: AG-4311®) of Ando Electrical Co. Ltd.), and is connected to the nickel foils 2A and 2B. The reference numeral 5 indicates a thermoelectric couple and is connected to a thermometer 6. The reference numeral 7 indicates a data collector, and is connected to an electric resistance device 4 and the thermometer 6. The reference numeral 8 is an oven for heating the microporous film.
More specifically, as shown in Fig. 1(b), the microporous film 1 is placed on the nickel foil 2A and both ends of the microporous film 1 in the longitudinal direction are fixed on the nickel foil 2A with a use of a Teflon® tape (shaded portions of the figure). The microporous film 1 was impregnated with an electrolyte: a 1 mol/L lithium borofluoride solution (solvent: propylene carbonate /ethylene carbonate /$\lambda$-butyl lactone =1/1/2). On the nickel foil 2B, a Teflon® tape is pasted as illustrated in Fig. 1(c) (shaded portion of the figure) to mask the nickel foil 2B except for a center portion $2B_1$ (15 mm $\times$ 10 mm window portion) of the nickel foil 2B. As to set the test piece, the microporous film 1 is sandwiched between the nickel foils 2A and 2B, and the two nickel foils 2A and 2B are sandwiched between the glass plates 3A and 3B. The microporous film 1 and the window portion of the nickel foil 2B are positioned to face each other. The two glass plates are fixed by clipping a commercially available double clip: LION OFFICE PRODUCTS CORP. Product Name: BINDER CLIPS No. 107N. The thermoelectric couple 5 is fixed to the glass plate with a use of a Teflon® tape. With this device, the temperature and electric resistance are continuously measured. The temperature was raised from 25°C to 200°C, at a speed of 2°C/min. The electric resistance is measured at AC 1kHz. The shutdown temperature is defined as a temperature at which the electric resistance of the microporous film reaches $10^3\Omega$.

(Method of Confirming Carboxyl Group Introduction)

TOF-SIMS measurement was conducted using TRIFT III (device name) produced by Physical Electronics to confirm the presence of COOH (M/Z=45). The measurement was conducted under the following conditions: the primary ion = Ga+, the acceleration voltage = 15kV, the current = 600 pA, the elapsed time = 3 min, and analyzed area = 200 $\mu$m$\times$200 $\mu$m.

(Measurement and Evaluation Results)

The measurement and evaluation were conducted, and each separator is evaluated as acceptable if the PC contact angle is not more than 40° and the shutdown temperature is not more than 170°C. The results are indicated in the following Table 1, along with fluorination conditions of each Examples.
[Table 1]

| Test Pieces | Fluorination Conditions | | | PC Contact Angle ° | Shutdown Temp. (°C) | Evaluation |
|---|---|---|---|---|---|---|
| | Partial Pressure of $F_2$ (Pa) | Partial Pressure of $O_2$ (kPa) | Process Temp. (°C) | | | |
| Example 1 | 1 | 120 | 20 | 40 | 148 | Acceptable |
| Example 2 | 20 | 120 | 20 | 26 | 155 | Acceptable |
| Example 3 | 60 | 120 | 20 | 14 | 162 | Acceptable |
| Example 4 | 100 | 120 | 20 | 10 | 165 | Acceptable |
| Example 5 | 20 | 120 | -50 | 32 | 150 | Acceptable |
| Example 6 | 20 | 120 | 100 | 6 | 170 | Acceptable |
| Example 7 | 20 | 100 | 20 | 22 | 142 | Acceptable |
| Comp. Example 1 | - | - | - | 71 | 140 | Not Acceptable |
| Comp. Example 2 | 0.5 | 120 | 20 | 41 | 147 | Not Acceptable |
| Comp. Example 3 | 200 | 120 | 20 | 8 | 171 | Not Acceptable |
| Comp. Example 4 | 20 | 120 | -70 | 71 | 148 | Not Acceptable |
| Comp. Example 5 | 20 | 120 | 135 | 6 | 195 | Not Acceptable |

The results in Table 1 shows that the contact angle of the polyethylene microporous film of each Example is smaller than that of the non-fluorinated separator of Comparative Example 1. That is, the affinity for electrolyte of the separator of each Example is improved. Further, it is further understood that the shutdown performance is also favorable. In Comparative Examples 2 and 4, the contact angle was not reduced due to insufficient fluorination. Further, in Comparative Examples 3 and 5, the contact angle was reduced but the shutdown temperature significantly increased, due to excessive fluorination. Introduction of COOH group was confirmed in Examples 1 to 7. The presence of COOH group was not confirmed in Comparative Example 1.
Next, measurements were conducted on the specific surface area, porosity, air permeability, pore diameter, puncture strength, and thermal shrinkage of the nonaqueous electrolyte secondary battery separator of Example 7. Note that the polyethylene porous film of 0.95g/cm$^3$ in density was used for the nonaqueous electrolyte secondary battery separator of Example 7.

(Measurement of Specific Surface Area)

The specific surface area was measured by a surface area measuring instrument (ASAP2400) produced by Shimadzu Corporation, through a nitrogen adsorption method. The test piece was cut into strips, and a strip of approximately 0.2g was folded to fit in a cell. The strip of test piece was placed in a cell, and degassed for about 15 hours at room temperatures, in a test piece pre-processing unit. Then, the specific surface area was measured. The surface area was derived using BET theory, and was $36m^2/g$.

(Porosity Measurement)

A sample of 10 cm square was cut out from the microporous film, the volume and weight of the sample was measured. Then, the porosity was calculated applying the volume and weight thus calculated in the following equation.

$$\text{Porosity (\%)} = \{(\text{Volume } (cm^3) - \text{Weight}(g)/\text{Density } (g/cm^3))/\text{Volume } (cm^3)\} \times 100$$

From the above equation, the porosity was found to be 41%.

(Air Permeability Measurement)

The air permeability was measured by using a Gurley air permeability tester in compliance with JIS P-8117. The resulting air permeability was 250 sec.

(Pore Diameter Measurement)

The pore diameter was measured by a mercury porosimeter (AutoPore 9520, produced by Shimadzu Corporation) through a mercury penetration method. The mode diameter was defined as the pore diameter. The resulting pore diameter was $0.08\mu$.

(Puncture Strength Measurement)

The puncture strength, which is the maximum puncture load (N), was measured by a handy compression tester (KES-G5; produced by Kato Tech CO., LTD.) with a needlepoint curvature radius of 0.5 mm and at a puncture speed of 2 mm/sec. The resulting puncture strength was 4.5N.

(Measurement of Thermal Shrinkage)

A sample (MD120 mmxTD120mm) was cutout from the microporous film, and three points were marked at an interval of TD100mm with a use of a permanent marker. The microporous film was sandwiched between sheets of copy paper (A4 size, $64g/m^2$ in weight, and 0.092 mm in thickness) produced by KOKUYO S&T Co., Ltd. These sheets were bound by stapling the side edges of the sheets. Then, the sheets were left for one hour, in an oven at a temperature of 100°C. After that, the sheets were air-cooled, and the TD lengths (mm) between the three markings were measured. The thermal shrinkage was calculated from the following equation, applying the average of the TD lengths among three markings. The resulting thermal shrinkage was 1% or lower.

$$\text{Thermal Shrinkage (\%)} = (1 - \text{TD length } (mm)/100) \times 100$$

[Example 8]

The following describes an example in which overcharging test is conducted with respect to a lithium ion secondary battery including the nonaqueous electrolyte secondary battery multilayered separator of the present invention. Particularly examined was whether the shutdown characteristic and liquid-retaining characteristic can be realized in separator layers, instead of a single layer, to form a nonaqueous electrolyte secondary battery multilayered separator of the present invention having improved shutdown characteristic, electrolyte-wettability, and liquid-retaining characteristic.

First, the nonaqueous electrolyte secondary battery multilayered separator of the present example is prepared as follows. A single 5$\mu$m-thick polyethylene porous layer is sandwiched between two 10 $\mu$m-thick fluorinated polyethylene porous layer. The three layers are thermally bonded through a heat-pinch rolls heated to 120°C, to form a three-layered separator. This separator was measured and evaluated as was done in Examples 1 to 6. The results are indicated in the above Table 1, along with results of other Examples.

Next, the thus produced nonaqueous electrolyte secondary battery multilayered separator is disposed between positive and negative electrodes, and to make a lithium ion secondary battery. The positive electrode was produced by sufficiently mixing 95 wt% of $LiCoO_2$ with 2 wt% of acetylene black and 3 wt% of PVDF, and shaping the mixture into an article of 40 mmx40 mm. For the negative electrode is used a lithium metal. For the electrolyte is used a mixed solvent of ethylene carbonate containing 1 mol/L of lithium hexafluorophosphate and diethyl carbonate at a ratio of 3:7. Through these processes, the lithium ion secondary battery of the present example is made.

(Lithium Ion Secondary Battery Overcharging Test)

The lithium ion secondary battery thus produced is full-charged by constant voltage at 4.2V (current limiting: 0.2CA). Then, the battery was discharged to 2.7V at a constant current of 0.2CA. Subsequently, the battery was connected to a stabilized power supply of 10V or higher, and charged for 1.25 hours at 2CA. When the safety device in the battery is activated, the charging was stopped immediately. The testing environment temperature was between 20$\pm$5°C, and the battery was considered as acceptable if no burst or ignition occurred. Even if acceptable, the measurement was continued until the heat generated in the battery reaches the maximum temperature. The Table 2 shows the results of the overcharging test.

[Table 2]

|  | Separator | | Result of Overcharqinq Test | |
|---|---|---|---|---|
|  | Structure | Thickness ($\mu$m) | Max. Battery Temp. (°C) | Evaluation |
| Example 8 | 1st Layer | 10 | 80 | Acceptable |
|  | 2nd Layer | 5 |  |  |
|  | 3rd Layer | 10 |  |  |

In Example 8, the liquid-wettability was retained, and the battery temperature at the time of overcharging was approximately 80°C, at the highest. Thus, in Example 8, the overcharge current was restrained at a relatively low temperature, and the increase in the battery temperature was restrained. This is because the liquid is retained by the 10$\mu$m-separators (two outer layers of the three layers, which respectively contact the positive and negative electrodes). This increases the reaction area, and the apparent overcharge current contributing to reaction is reduced as compared to a battery whose separator is not capable of retaining liquid. Thus, an exothermic reaction attributed to metallic lithium deposition and dendrite growth is restrained. Further, the electrolyte is decomposed on the positive electrode at the time of overcharging, thus generating oxygen gas. Therefore, the larger the amount of fluid phase, the better is restrained a heat-generating reaction which involves $LiC_6$ and metallic lithium, and takes place in the interfaces among three (phases) layers, i.e. solid phase(the surface of negative electrode), fluid phase (the electrolyte), and gas phase (space). As a result, it is found that the heat generation of the battery is restrained, and a highly safe separator is provided.

The present invention may be altered in various ways, within the scope of the claims set forth below, and is not limited to the above described embodiment and examples. For example, Example 8 deals with a separator having multiple layers each made of a porous film. For example, the same effect is achieved by a separator having multiple porous layers formed in one piece or laminated, each of which layers is made of a nonwoven fabric, a woven fabric, or a microporous film.

INDUSTRIAL APPLICABILITY

The present invention provides a separator having both a favorable electrolyte-retaining characteristic and a suitable shutdown performance. The present invention therefore is suitably applied to separators of nonaqueous electrolyte secondary batteries.

BRIEF DESCRIPTION OF THE DRAWINGS

[Fig. 1] (a) is a schematic diagram illustrating a shutdown characteristic measuring device of the present invention, (b) is a plane diagram of one of nickel foils shown in (a), and (c) is a plane view of another one of the nickel foil shown in (a).

REFERENCE NUMERALS

1 Microporous Film
2A, 2B Nickel Foil
3A, 3B Glass Plate
4 Electric Resistance Device
5 Thermoelectric Couple
6 Thermometer
7 Data Collector

**Claims**

1. A process of manufacturing a separator for a nonaqueous electrolyte secondary battery comprising a step of processing a polyolefin based resin with a mixed gas containing oxygen gas and fluorine gas at a temperature between -50°C and 100°C,
   **characterized in that**
   the volume ratio of fluorine gas versus oxygen gas is less than 0.01 to obtain a separator which forms a contact angle of 40° or smaller with a nonaqueous solvent electrolyte, and whose shutdown temperature is 170°C or lower.

2. A process according to claim 1, wherein the volume ratio of fluorine gas versus oxygen gas is less than 0.001.

3. A process according to claim 1 or 2, wherein the partial pressure of the fluorine gas is between 1 to 100 Pa.

4. A process according to claim 1 or 2, wherein the partial pressure of the fluorine gas is between 1 to 50 Pa.

5. A process according to any one of claims 1 to 4, wherein the partial pressure of the oxygen gas is between 1 kPa and 300 kPa.

6. A process according to any one of claims 1 to 4, wherein the partial pressure of the oxygen gas is between 50 kPa and 200 kPa.

7. A process according to any one of the preceding claims, wherein the separator is a multilayered separator for a nonaqueous electrolyte secondary battery, comprising a plurality of layers, at least one of which consists of the processed polyolefin based resin.

8. A process according to any one of the preceding claims, wherein a functional group having affinity for electrolyte is introduced to at least a part of a surface of the processed polyolefin based resin.

**Patentansprüche**

1. Verfahren zur Herstellung eines Separators für eine Sekundärbatterie mit wasserfreiem Elektrolyten, das einen Schritt umfasst, bei dem ein Harz auf Polyolefinbasis bei einer Temperatur zwischen -50°C und 100°C mit einem Sauerstoffgas und Fluorgas enthaltenden Mischgas behandelt wird,
   **dadurch gekennzeichnet, dass**
   das Volumenverhältnis von Fluorgas gegenüber Sauerstoffgas weniger als 0,01 beträgt, um einen Separator zu erzielen, der mit einem wasserfreien Lösungsmittelelektrolyten einen Kontaktwinkel von 40°C oder weniger bildet und dessen Abschalttemperatur 170°C oder weniger beträgt.

2. Verfahren nach Anspruch 1, wobei das Volumenverhältnis von Fluorgas gegenüber Sauerstoffgas weniger als 0,001 beträgt.

3. Verfahren nach Anspruch 1 oder 2, wobei der Partialdruck des Fluorgases zwischen 1 bis 100 Pa liegt.

4. Verfahren nach Anspruch 1 oder 2, wobei der Partialdruck des Fluorgases zwischen 1 bis 50 Pa liegt.

5. Verfahren nach einem der Ansprüche 1 bis 4, wobei der Partialdruck des Sauerstoffgases zwischen 1 kPa und 300 kPa liegt.

6. Verfahren nach einem der Ansprüche 1 bis 4, wobei der Partialdruck des Sauerstoffgases zwischen 50 kPa und 200 kPa liegt.

7. Verfahren nach einem der vorstehenden Ansprüche, wobei der Separator ein mehrschichtiger Separator für eine Sekundärbatterie mit wasserfreiem Elektrolyten ist, der eine Vielzahl von Schichten umfasst, von denen mindestens eine aus dem behandelten Harz auf Polyolefinbasis besteht.

8. Verfahren nach einem der vorstehenden Ansprüche, wobei in zumindest einem Teil einer Oberfläche des behandelten Harzes auf Polyolefinbasis eine funktionale Gruppe mit Affinität für Elektrolyt eingebracht wird.


**Revendications**

1. Processus de fabrication d'un séparateur pour une batterie rechargeable à électrolyte non aqueux comprenant une étape de traitement de la polyoléfine à base de résine avec un gaz mélangé contenant du gaz d'oxygène et du gaz de fluor à une température comprise entre -50°C et 100°C,
**caractérisé en ce que**
le rapport en volume du gaz de fluor par rapport au gaz d'oxygène est inférieur à 0,01 pour obtenir un séparateur qui forme un angle de contact de 40° ou moins avec un électrolyte de solvant non aqueux, et dont la température d'arrêt est de 170°C ou moins.

2. Processus selon la revendication 1, dans lequel le rapport en volume du gaz de fluor par rapport au gaz d'oxygène est inférieur à 0,001.

3. Processus selon la revendication 1 ou 2, dans lequel la pression partielle du gaz de fluor est comprise entre 1 et 100 Pa.

4. Processus selon la revendication 1 ou 2, dans lequel la pression partielle du gaz de fluor est comprise entre 1 et 50 Pa.

5. Processus selon l'une quelconque des revendications 1 à 4, dans lequel la pression partielle du gaz d'oxygène est comprise entre 1 kPa et 300 kPa.

6. Processus selon l'une quelconque des revendications 1 à 4, dans lequel la pression partielle du gaz d'oxygène est comprise entre 50 kPa et 200 kPa.

7. Processus selon l'une quelconque des revendications précédentes, dans lequel le séparateur est un séparateur à couches multiples pour une batterie rechargeable à électrolyte non aqueux, comprenant une pluralité de couches, au moins l'une étant constituée de la polyoléfine traitée à base de résine.

8. Processus selon l'une quelconque des revendications précédentes, dans lequel un groupe fonctionnel ayant une affinité pour l'électrolyte est introduit à au moins une partie d'une surface de la polyoléfine traitée à base de résine.

FIG. 1A

FIG. 1B

Longitudinal direction

FIG. C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6116436 A
- JP TOKUKAIHEI6116436 B
- JP 3521523 B
- JP 9220453 A
- JP TOKUKAIHEI9220453 B
- JP 11322989 A
- JP TOKUKAIHEI11322989 B
- JP 3258737 B
- JP 3235669 B